# EUROPEAN PATENT SPECIFICATION

(11) **EP 2 717 992 B1**
(45) Date of publication and mention of the grant of the patent: **11.08.2021**
(21) Application number: 12725832.5
(22) Date of filing: 06.06.2012
(51) Int. Cl.: B01D 53/62, B01D 53/02, B01J 20/22, B01J 20/26, B01J 20/32, B01J 20/28, B82Y 30/00

(54) **POROUS ADSORBENT STRUCTURE FOR ADSORPTION OF CO2 FROM A GAS MIXTURE**
PORÖSE ADSORPTIONSSTRUKTUR ZUR ADSORPTION VON CO2 AUS EINEM GASGEMISCH
STRUCTURE ABSORBANTE POREUSE POUR L'ABSORPTION DU CO2 À PARTIR D'UN MÉLANGE GAZEUX

(30) Priority: 06.06.2011 EP 11168838
(43) Date of publication of application: 16.04.2014
(73) Proprietor: EMPA Eidgenössische Materialprüfungs- und Forschungsanstalt, 8600 Dübendorf (CH)
(72) Inventor: GEBALD, Christoph, CH-8044 Zürich (CH); ZIMMERMANN, Tanja, CH-8044 Gockhausen (CH); TINGAUT, Philippe, CH-4500 Solothurn (CH)
(74) Representative: Schmauder & Partner AG Patent- & Markenanwälte VSP
(86) International application number: PCT/EP2012/060778
(87) International publication number: WO 2012/168346

(56) References cited:
- EP-A1- 2 196 478
- WO-A1-2010/091831
- WO-A1-2011/030170
- JP-A- 2008 266 630

## Description

### Field of the Invention

The present invention generally relates to porous adsorbent structures for adsorption of CO₂ from a gas mixture, to methods for producing such structures and to uses thereof.

### Background of the Invention

The capture of CO₂ from gaseous mixtures has considerable potential for environmental protection, but also in economical terms. In particular, removal of CO₂ from atmospheric air is considered to be an important and promising option in the portfolio of technologies to mitigate global climate change (see e.g. WO 2010/091831 and references cited therein).

Amine modified solid sorbents are known to be suitable for CO₂ capture from gas streams like flue gases or air (see e.g. WO 2010/091831 and references cited therein). Generally amine modified solid sorbents describe a class of materials where amines are immobilized on a porous solid substrate, either through physisorption or covalent bonding. In the scientific and patent literature several different solid supports and amines have been investigated for CO₂ capture. So far patents include silica (WO 2008/021700), carbonaceous materials (US 6547S54), polymeric materials (WO2008/131132, WO 2009/067625), natural fibers (WO 2009/067625, WO 2010/091831) and clay (US 6908497) as solid supports.

Although the efficiency of CO₂ removal is an important factor, there are clearly further requirements to be fulfilled by a viable technology for CO₂ removal from atmospheric air. Current estimates indicate that for each ton of captured CO₂ at least 1 kg of adsorbent material is needed. Hence, in order to avoid large amounts of waste being created, it is highly desirable to find CO₂ adsorbers that are not only efficient, but also made of biobased materials like natural fibers, as the latter stem from re-growing sources which can easily be recycled. One such biomaterial is cellulose, which has many advantages such as abundance, biodegradability, biocompatibility and a high surface area.

Cellulose is obtained from plants in the form of fibers having a diameter of about 30 to 100 µm and a length of several millimeters. These cellulose fibers are composed of cellulose microfibrils with a diameter of 2 to 10 nm and a length of several tens of microns formed during biosynthesis in higher plants. The disintegration of cellulose fibers to microfibrils aggregates is well known and was first described in US 4483743. In the present invention, cellulose fibrils were produced that had a diameter of 4 nm to 1 µm and a length of 100 nm to 1 mm, which will be referred to as cellulose nanofibers hereinbelow. Occasionally, cellulose fibrils having a diameter of more than 1 µm were present in the product, which can be a desired property of the product described herein. In the literature several notations exist, which describe products having similar dimensions to the cellulose nanofibers described here, where the most important notations are nanofibrillated cellulose (abbreviated as NFC), microfibrillated cellulose (abbreviated as MFC), cellulose nanowhiskers and cellulose nanocrystals.

The modification of cellulose fibers having diameters in the micrometer range and cellulose nanofibers having a diameter from 4 nm to 1 µm and a length from 100 nm to 1 mm with aminosilanes is generally known, and several scientific and patent publications exist (e.g. EP 2196478).

So far amine modified cellulose nanofibers have been used for composite structures (WO 2010/066905) and as antimicrobial tissues. The state of the art preparation method for amine modified cellulose nanofibers is to immerse the aminosilane and cellulose nanofibers in an aqueous or alcoholic solution, stir the resulting mixture and filter the wet slurry. The wet slurry is then either oven or air dried. Thereby, non-porous, densely packed amine modified cellulose nanofiber films are created. These films are not appropriate for CO₂ capture as the reactive amine sites are not accessible for the CO₂ molecules.

In summary, although various methods and devices for capturing CO₂ from gas mixtures are basically known, there is still a strong need for improved technical solutions.

### Summary of the Invention

The above mentioned and further tasks are solved by the present invention, which provides methods as defined in claims 1 and 3 for producing a porous adsorbent structure that is capable of a reversible adsorption and desorption cycle for capturing CO₂ from a gas mixture.

The porous adsorbent structures comprise a support matrix of surface modified cellulose nanofibers, which surface modified cellulose nanofibers consist of cellulose nanofibers having a diameter of about 4 nm to about 1000 nm covered with a coupling agent being covalently bound to the surface thereof. The support matrix is a web of nanofibers with a porosity of at least 20%, preferably above 50%, even more preferably above 60%, where porosity is defined as the volume of the void over the total volume, and the coupling agent comprises at least one monoalkyldialkoxyaminosilane. The porous web of cellulose nanofibers can have the properties of an aerogel.

Advantageous embodiments are defined in the dependent claims.

As used herein, the general term "cellulose nanofiber" is defined as a cellulose fiber-like nanostructure with a diameter varying from about 4 to about 1000 nm, which includes, in particular but not exclusively, cellulose nanofibrils having a length of about 1 µm or more and cellulose nanowhiskers having a length of about 100 to 500 nm and a diameter below 10 nm.

As is generally known, aerogels are solid materials with high porosity and surface area, low density and other interesting mechanical and non-mechanical properties. Aerogels made from cellulose have been known for some time, and prepared from NFC suspensions, from bacterial cellulose, from cellulose nanoparticles (WO 2011/030170), from cellulose nanowhiskers and through dissolving cellulose. In analogy with the definitions used in WO 2011/ 030170 the term "aerogel" shall be understood here as an open porous structure with a porosity of at least 20%. However, the support matrices used in the present invention can be prepared with varying degrees of porosity above 20%, preferably above 50%, and even more preferably above 60%. They will generally have a BET (Brunauer-Emmett-Teller) surface area exceeding 2 m²/g, preferably more than 5 m²/g, and even more preferably more than 6 m²/g.

The cellulose nanofiber material used to prepare the nanofiber webs according to the present invention will often contain a certain amount of long fibers and/or larger diameter fibers, henceforth briefly called "large cellulose fibers". As used here, "large cellulose fibers" are defined as having a diameter in the range of more than 1 µm up to the diameter of the pristine plant fiber, i.e. 30 µm to 100 µm, and/or having a length exceeding 1 mm. However, a key requirement of the invention is the presence of a sufficiently large proportion of small cellulose nanofibers having a diameter not exceeding 1000 nm. From an operational point of view, the average diameter of the cellulose nanofibers shall be small enough so that suspending 2% w/w of the cellulose nanofiber material in water will form a hydrogel having a viscosity of at least 2000 mPa*s at a shear rate of 0.1 Hz.

According to the invention, the coupling agent shall comprise at least one monoalkyldialkoxyaminosilane. This term shall be understood here to designate an aminofunctional silane compound with the general formula (I) 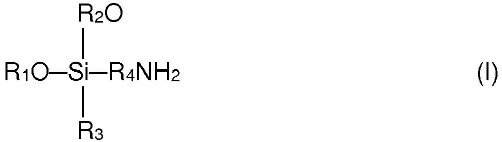 wherein R₁, R₂ and R₃ are independently selected C1-C5 alkyl groups. Preferably, R₁, R₂ and R₃ are selected from methyl and ethyl, and preferably R₁ and R₂ are identical. The group R₄ is a linear or branched C3-C12 alkyl moiety wherein one or more of the CH₂ groups is optionally replaced by a NH group. In general the presence of such NH groups provides additional amine functionality to the silane agent. Such compounds are generally known and can partly be purchased from various suppliers. Preferred selections of these silane compounds are discussed further below.

It was surprisingly found that the application of the above defined monoalkyldialkoxyaminosilane to a porous support matrix formed as a web of cellulose nanofibers leads to an adsorbent structure with highly advantageous properties. Such adsorbent structure is capable of a reversible adsorption and desorption cycle for capturing CO₂ from a gas mixture. In particular, it was found that monoalkyldialkoxyaminosilanes give substantially better results than the trialkoxyaminosilanes used in the prior art. A key feature of the present invention is the presence of monoalkyldialkoxyaminosilane.

Although patent documents JP 2008 2666630 A and EP 2196478 both disclose some type of structure containing cellulose nanofibers partially covered by a monoalkyldialkoxyaminosilane, they do not refer to the task of CO₂ adsorption and the related key feature of using a monoalkyldialkoxysilane. They do not disclose any specific method steps aimed at producing a highly porous structure as in the present invention. Rather than that, they generally seek to provide materials with improved mechanical properties.

The adsorbent structures produced according to the present invention have good recyclability, i.e. they can be subjected to a large number of CO₂ adsorption/desorption cycles without any substantial loss of performance. Moreover, they operate in a dry state, i.e. unlike some previously disclosed adsorbent structures they do not require wetting with a liquid able to react with CO₂.

Advantageously, the adsorbent structures are used for removing CO₂ from ambient air. It is contemplated that the adsorbent structures may also be used for other reactive species such as SO₂.

Basic processes that can be used for the removal of CO₂ from ambient air have been described in WO 2010/091831 A1. In a typical adsorption process, ambient air is passed at an appropriate flow velocity through the adsorbent material, which is configured e.g. as a mat-like structure, thereby loading the adsorbent material with CO₂.Thereafter, the structure can be regenerated, i.e. the adsorbed CO₂ can be released again, through a temperature increase and/or a pressure reduction. The necessary heat can be added to the structure via any form of heat exchanger, a gas or also by direct or indirect solar irradiation. During the regeneration process a suitable construction like shutters, multiple layers of perforated plates, a cylindrical structure that is covered with a lid etc. keeps the adsorbent structure isolated from the environment in order to capture the released CO₂ and conduct it out of the system.

In the use of the adsorbent structures produced according to the invention, there is provided a process for removing CO₂ from ambient air, which process comprises the steps of:
a) providing a porous adsorbent structure as defined further above;
b) establishing a flow of ambient air through said adsorbent structure, thereby loading the adsorbent material with CO₂ ;
c) interrupting said flow;
d) regenerating said adsorbent structure by releasing the CO₂ adsorbed thereto; and
e) optionally repeating steps b) to d) as required.

It will be understood that said regenerating step d) may be carried out "offline", i.e. by removing said adsorbent structure and taking the same to a suitable regeneration device. To this end it may be useful to utilize a plurality of adsorbent structures so as to avoid extended process interruption time.

According to one aspect, there is provided a method for producing a porous adsorbent structure as defined above, which method comprises the steps of:
a) providing a first amount of a homogenized suspension of cellulose nanofibers having a diameter of about 4 nm to about 1000 nm and a length of 100 nm to 1 mm in a solvent;
b) adding thereto a second amount of a coupling agent comprising at least one monoalkyldialkoxyaminosilane, thereby allowing formation of a homogeneous suspension of surface modified cellulose nanofibers in said solvent;
c) mechanically concentrating said suspension through centrifugation, filtration or pressing, thereby obtaining a wet slurry;
d) optionally washing said wet slurry with said solvent;
e) removing said solvent by a drying operation, said drying operation being selected from freeze drying, atmospheric freeze drying, or a combination thereof, preferably freeze drying, thereby obtaining a dried material; and
f) subjecting said dried material to a heating process in an inert atmosphere, thereby obtaining said porous adsorbent structure.

The above defined method starts with a homogenized suspension of cellulose nanofibers, which may be obtained by various known means, to which is added the selected coupling agent. The choice of solvent will depend on various factors, including the selected coupling agent, the hydrolysis of the selected coupling agent, the drying method, environmental considerations and economics. In many applications it will be preferable to use an aqueous medium, particularly deionized water. In one embodiment, the aqueous medium is acidified, preferably with acetic acid or CO₂.In a particularly preferred embodiment, the aqueous medium is acidified with CO₂.

In order to avoid an unacceptable loss of porosity, it is essential that the removal of the solvent be carried out by a method that does not cause a collapse of the porous structure. Accordingly, the solvent is removed by freeze drying, atmospheric freeze drying, air drying, vacuum drying, heating or a combination thereof, preferably freeze drying.

According to a further aspect, there is provided a method for producing a porous adsorbent structure as defined above, said support matrix further comprising an admixture of large cellulose fibers, said large cellulose fibers having a diameter of more than 1 µm and/or a length exceeding 1 mm, the method comprising the steps of:
a) providing a first amount of a homogenized suspension of cellulose nanofibers having a diameter of about 4 nm to about 1000 nm and a length of 100 nm to 1 mm in a solvent, wherein said homogenized suspension of cellulose nanofibers further comprises an admixture of large cellulose fibers, said large cellulose fibers having a diameter of more than 1 µm and/or a length exceeding 1 mm;
b) adding thereto a second amount of a coupling agent comprising at least one monoalkyldialkoxyaminosilane, thereby allowing formation of a homogeneous suspension of surface modified cellulose nanofibers in said solvent;
c) mechanically concentrating said suspension through centrifugation, filtration or pressing, thereby obtaining a wet slurry;
d) optionally washing said wet slurry with said solvent;
e) removing said solvent by air drying at room temperature, thereby obtaining a dried material; and
f) subjecting said dried material to a heating process in an inert atmosphere, thereby obtaining said porous adsorbent structure.

As already mentioned above, the choice of solvent will depend on various factors, including the selected coupling agent, the hydrolysis of the selected coupling agent, the drying method, environmental considerations and economics. In many applications of this further method it will be preferable to use ethanol.

The optional washing step d) and e), respectively, in the above defined methods allows recuperation of not adsorbed coupling agent and thus contributes to an economically and ecologically improved process.

In many embodiments, the coupling agent comprises just one monoalkyldialkoxyaminosilane. However, the invention is not limited to such cases, and it may actually be advantageous if the coupling agent comprises at least one further monoalkyldialkoxyaminosilane.

The compound class of monoalkyldialkoxyaminosilanes as defined above comprises a large number of compounds. It is generally understood that the two alkoxy groups R₁O and R₂O,which preferably are identical, e.g. two methoxy or two ethoxy groups, provide the functionality for covalent coupling to the cellulose nanofiber structure. This bonding takes place by hydrolysis of the alkoxy-group(s), followed by the condensation of the generated silanol groups with the hydroxyl-groups on the surface of the nanofibers. In contrast, the alkyl group R₃ will generally act as an inert moiety in the present application context. The amine group, on the other hand, plays an important role for the capture of CO₂ molecules. For the intended purpose of the present invention it is important that the amine group of the covalently bound silane agent remains free to react with CO₂, whereas a bonding of the amine moiety to the cellulose nanofibers is considered to be undesirable. Using a coupling agent predominantly comprising one or more monoalkyldialkoxyaminosilanes according to the present invention leads to surprisingly good results in terms of overall performance of the adsorbent structure. Without being bound by theory, it appears that these advantageous effects are related to the fact that monoalkyldialkoxyaminosilanes on the one hand do not form any 3-dimensional polysiloxanes but on the other hand are capable of forming the required porous adsorbent structure by forming linear structures.

In a preferred embodiment, each one of the monoalkyldialkoxyaminosilane is selected from the group consisting of:
- 3-aminopropylmethyldiethoxysilane,
- N-(2-Aminoethyl)-3-aminopropyl-methyldimethoxysilane, and
- N-(3-Methyldimethoxysilylpropyl)diethylenetriamine.

The first compound, 3-aminopropylmethyldiethoxysilane (CAS 3179-76-8), is a monoamine functional silane with the reactive amine group located at the distal end of the propyl substituent. The second compound, N-(2-Aminoethyl)-3-aminopropyl-methyldimethoxysilane (CAS 3069-29-2), is a diamine functional silane wherein one of the hydrogens of the reactive amine group of the above mentioned first compound is replaced by an aminoethyl group. The third compound, N-(3-Methyldimethoxysilylpropyl)diethylenetriamine, is a triamine functional silane wherein one of the hydrogens of the reactive amine group of the above mentioned second compound is replaced by an aminoethyl group. The first two compounds can be purchased whereas the third compound can be synthesized by known methods.

In a further embodiment, the coupling agent further comprises a trialkoxyaminosilane in an amount of up to 60% by weight with respect to the total coupling agent weight. The term "trialkoxyaminosilane" shall be understood here to designate an aminofunctional silane compound with the general formula (II) 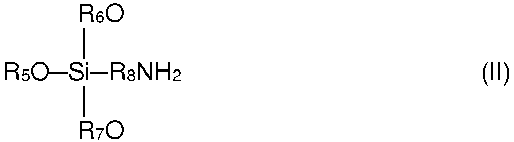 wherein R₅, R₆ and R₇ are independently selected C1-C5 alkyl groups. Preferably, R₅, R₆ and R₇ are selected from methyl and ethyl, and preferably they are identical. The group R₈ is a linear or branched C3-C12 alkyl moiety wherein one or more of the CH₂ groups is optionally replaced by an NH group.

This also includes mixtures of trialkoxysilanes, in which case the total amount of trialkoxyaminosilanes shall not exceed the above mentioned 60% limit. In a further embodiment, the coupling agent further comprises a trialkoxyaminosilane in an amount of up to 25% by weight with respect to the total coupling agent weight.

In a specific embodiment, the trialkoxyaminosilane(s) is/are selected from the group consisting of:
- 3-aminopropyltriethoxysilane (CAS 919-30-2),
- 3-aminopropyltrimethoxysilane (CAS 13822-56-5),
- N-(2-Aminoethyl)-3-aminopropyl-trimethoxysilane (CAS 1760-24-3),
- N-(2-Aminoethyl)-3-aminopropyl-triethoxysilane (CAS 5089-72-5), and
- N-(3-Trimethoxysilylpropyl)diethylenetriamine (CAS 35141-30-1).

For many practical applications, it is preferable for the adsorbent structure to further comprise a reinforcing structure. Such reinforcing structures may have a variety of configurations depending on the application. For example, they may be formed by an admixture of long reinforcing fibers or by a honeycomb structure. In one embodiment, a reinforcing fiber mat is used to form CO₂ adsorber panels of approximately A4-size (i.e. approximately 21 x 30 cm) or 15 x 15 cm, but of course any other sizes are possible.

While freeze drying methods comprising vacuum freeze drying and atmospheric freeze drying readily work with any cellulose nanofiber material as defined further above, this is not always the case for non-freeze drying methods such as air drying. Surprisingly, air drying was found to produce comparatively low porosity structures when using high-quality cellulose nanofiber material having only small amounts of large cellulose fibers. Therefore, an economically and ecologically advantageous embodiment of the invention relies on using lower quality cellulose nanofiber material having an appreciable admixture of large cellulose fibers and applying a non-freeze drying method.

### Brief description of the drawings

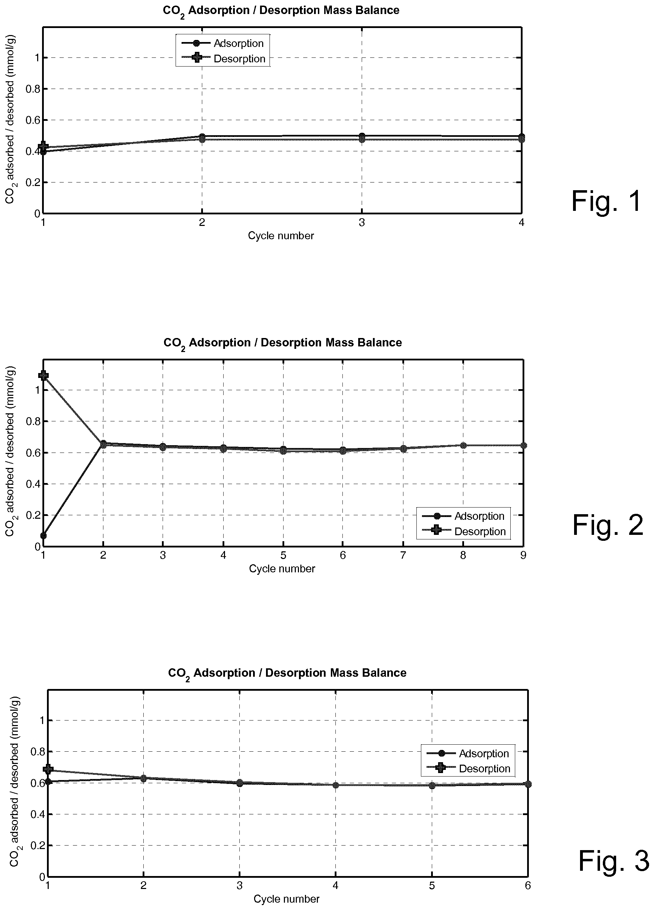

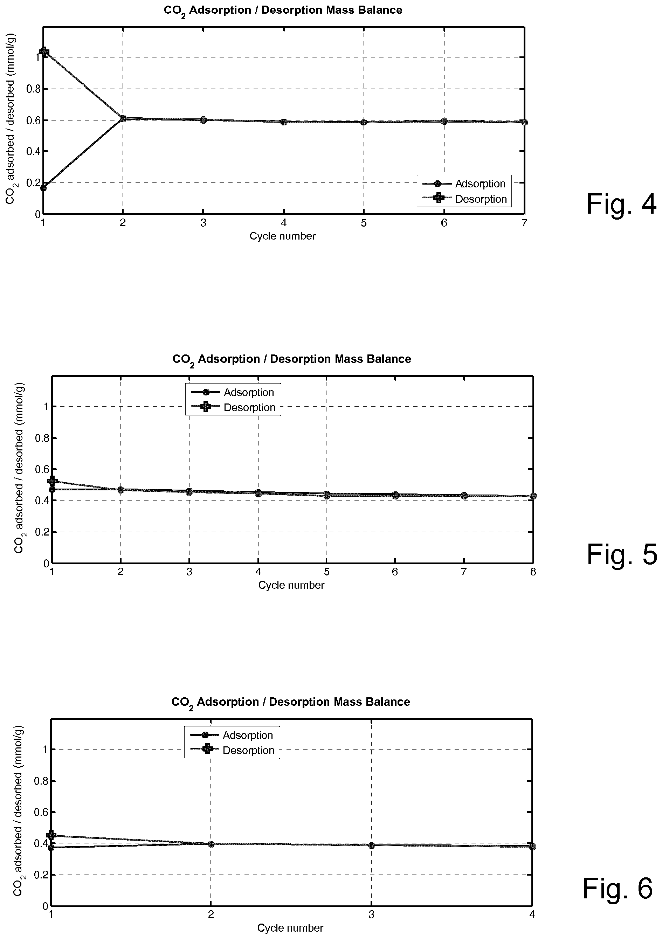

The above mentioned and other features and objects of this invention and the manner of achieving them will become more apparent and this invention itself will be better understood by reference to the following description of various embodiments of this invention taken in conjunction with the accompanying drawings. Each figure shows the CO₂ adsorption/desorption mass balance for a certain number of cycles under specified adsorption and desorption conditions, which include the gas medium and flow rate, the temperature, the relative humidity (RH) expressed at a given temperature and the cycle time. In all these measurements the desorbed amount in the first cycle was higher than the adsorbed amount in the first cycle, which was particularly pronounced in the measurements of Fig. 2 and Fig. 4. This effect is attributed to the fact that the samples were stored in ambient air for a certain time before starting the experiments and thus had already adsorbed a certain quantity of CO₂..
- Fig. 1: Example 3, adsorbent mass 0.8 g,
Adsorption: 1l/min air, 25°C, RH 0% @ 25°C, 60min,
Desorption: 0.8l/min argon, 90°C, RH 0% @ 25°C, 30min;
- Fig. 2: Example 3, adsorbent mass 0.8 g,
Adsorption: 1l/min air, 25°C, RH 40% @ 25°C, 60min,
Desorption: 0.8l/min argon, 90°C, RH 0% @ 25°C, 60min;
- Fig. 3: Example 5, adsorbent mass 1.2 g,
Adsorption: 1l/min air, 25°C, RH 40% @ 25°C, 60min,
Desorption: 0.8l/min argon, 90°C, RH 40% @ 25°C, 60min;
- Fig. 4: Example 8, adsorbent mass 1.1 g,
Adsorption: 1l/min air, 25°C, RH 40% @ 25°C, 60min,
Desorption: 0.8l/min argon, 90°C, RH 40% @ 25°C, 45min;
- Fig. 5: Example 9, adsorbent mass 0.8 g,
Adsorption: 1l/min air, 25°C, RH 40% @ 25°C, 60min,
Desorption: 0.8l/min argon, 90°C, RH 40% @ 25°C, 60min;
- Fig. 6: Example 10, adsorbent mass 1.0 g,
Adsorption: 1l/min air, 25°C, RH 40% @ 25°C, 60min,
Desorption: 0.8l/min argon, 90°C, RH 40% @ 25°C, 60min.

The time required to reach the maximum CO₂ capture capacity under the above conditions is typically in the order of 12 hours, which is clearly longer than the above indicated adsorption time of 60 min. However, using shorter cycles in the order of 1 h will often be more viable from an industrial scale process. Therefore, the results presented in the figures are considered important indicators for the practical performance of the investigated systems.

### Detailed description of the invention

### 1. Isolation of cellulose nanofibers

1.2 kg refined fibrous beech wood pulp suspension having a dry material content of 13.5% w/w (Arbocel P10111 obtained from Rettenmeier & Söhne GmbH & Co. KG, Germany) was placed in a 10 liter thermostatic glass reactor kept at 15ºC and diluted with 8.8 kg of deionized water. The starting material is considered as a mixture of cellulose nanofibers and large cellulose fibers. The resulting suspension was stirred at 148 rpm for 21 h to allow swelling. Thereafter the suspension was homogenized for 170 min through an inline Ultra-Turrax system (Megatron MT 3000, Kinematica AG, Switzerland) at 15'000 rpm, which was connected to the glass reactor. The homogenized suspension was subjected to high shearing-stress generated through a high-shear homogenizer (Microfluidizer Type M-110Y, Microfluidics Corporation, USA). Thereby the suspension was pumped for 10 passes through a sequence of 400 µm and 200 µm interaction chambers and subsequently for 5 passes through a sequence of 200 µm and 75 µm interaction chambers at a flow rate of 9.75 g/s.

### 2. Production of dried porous cellulose nanofibers

Water was removed from the cellulose nanofiber suspension obtained according to Example 1 through centrifugation at 3'600 rpm for 20 min and subsequent freeze drying. For freeze drying, 25 ml of solution were poured in a copper cylinder, having a diameter of 40 mm. The copper cylinder was then immersed in liquid nitrogen and the frozen sample was dried in a freeze dryer without heating and/or cooling.

### 3. Production of a porous adsorbent structure starting from cellulose nanofiber suspension

0.96g of 3-aminoproplymethyldiethoxysilane were hydrolyzed in 7.5g of demineralized water for 2h under stirring. To 25 g of cellulose nanofibers having a dry mass content of 3.2 % w/w in a beaker, the hydrolyzed silane-H2O mixture was added and completed with demineralized water to 40.8g. The resulting mixture was homogenized for 5 min at 12'000 rpm using an Ultra-Turrax blender device. The homogenized mixture was stirred for 2h. Thereafter the mixture was poured in a copper form that was immersed in liquid nitrogen. The frozen mixture was dried for 48 h in a freeze dryer. After freeze drying the sample was thermally treated at 120ºC in an argon atmosphere.

The porous structure thus produced had a CO₂ capture capacity of 1.15 mmol CO₂/g adsorbent and a CO₂ uptake rate of around 10 µmol CO₂/g adsorbent/min during the first 60 min of CO₂ adsorption. The BET surface was 22.9 m²/g. The cyclic adsorption/desorption performance is given in Figs. 1 and 2 for two different conditions, namely adsorption of dry air and a short desorption cycle in Fig. 1, and adsorption of humid air and a longer desorption cycle in Fig. 2.

### 4. Incorporation of a reinforcing structure

In a variant of the procedure described in Example 3, the solution was poured into a tray-like copper mold in which a reinforcing web of polyurethane fibers with a mesh size of 10 mm had been laid out. This was followed by freeze drying as in Section 2.

### 5. Production of a porous adsorbent structure starting from dried porous cellulose nanofibers

1 g of a dry porous cellulose nanofiber web product as obtained according to Example 2 was immersed in a solution containing 4 g of 3-aminopropylmethyldiethoxysilane in 100 g ethanol and kept for 24 h. Subsequently, the solution was removed by filtering and the resulting residue was dried in air so as to obtain a silane coated cellulose nanofiber specimen. This specimen was cured at 120°C for 2 h in an inert atmosphere, thereby yielding a porous adsorbent structure.

The CO₂ uptake rate was 10 µmol CO₂/g adsorbent/min during the first 60 min of CO₂ adsorption. The BET surface area was 8.8 m²/g. The cyclic adsorption/ desorption performance is given in Fig. 3.

### 6. Production of an adsorbent structure starting from cellulose nanofiber suspension containing an admixture of large cellulose fibers (without freeze drying)

3.09 g of N-(2-Aminoethyl)-3-aminopropyl-methyldimethoxysilane were hydrolyzed in 7.5 g of demineralized H₂O for 2h under stirring. 6 g of refined fibrous beech wood pulp suspension as described in Example 1 (13.5% w/w) was solvent exchanged (3 times) with an EtOH/H₂O mixture (95/5, w/w), with ultra turrax homogenization for 1 min before each exchange.
The solvent exchanged cellulose nanofibers, the silane-H₂O mixture and 142.5 g of EtOH were transferred to a beaker and were completed to 162 g with an EtOH/H₂O mixture (95/5, w/w).

The resulting mixture was blended with an ultra turrax for 1 min, thereafter stirred for 2 h and then poured completely on a Nutsche filter (0=11 cm) and filtered by gravitation. The retentate was dried at room temperature for several days and subsequently cured at 60°C for 3 h. The porous structure thus produced had a CO₂ capture capacity of 1.1 mmol CO₂/g adsorbent.

### 7. Production of a porous adsorbent structure starting from cellulose nanofiber suspension (only trialkoxy silane)

For the present and the following examples, the experimental procedure is given in a short list form.
- Into a beaker 46.2 g of cellulose nanofiber suspension (@ 3.2 wt. %) were added and completed with demineralized H₂O to 288g
- Ultra turraxed for several minutes between 12k and 17k rpm
- Added 12g of 3-aminopropyltriethoxysilane
- Stirred mixture for 24 h at 500 rpm
- Centrifuged for 20 min @3600 rpm
- Frozen in liquid N₂
- Evacuated frozen sample in freeze drier for 48 h
- Cured at 120°C for 2 h in Argon

The CO₂ capture capacity after 12 h of CO₂ exposure was 0.32 mmol/g, and the BET surface area was 15.9 m²/g.

### 8. Production of a porous adsorbent structure starting from cellulose nanofiber suspension (similar to 7 but dialkoxy)

- Into a beaker were added 46.2 g of cellulose nanofiber suspension (@ 3.2 wt. %) and completed with demineralized H₂O to 288 g
- Ultra turraxed for several minutes between 12k and 17k rpm
- Added 12 g of 3-aminopropylmethyldiethoxysilane
- Stirred mixture for 24 h at 500 rpm
- Centrifuged for 20 min @ 3600 rpm
- Frozen in liquid N₂
- Evacuated frozen sample in freeze drier for 48 h
- Cured at 60°C for 180 minutes

The CO₂ capture capacity after 12 h of CO₂ exposure was 1.277 mmol/g and the BET surface area was 9.6 m²/g. The cyclic adsorption/ desorption performance is given in Fig. 4.

### 9. Production of a porous adsorbent structure starting from cellulose nanofiber suspension (dialkoxy CO₂ acidification)

- Into a beaker were added 46.2 g of cellulose nanofiber suspension (@ 3.2 wt. %) and completed with demineralized H₂O to 288 g
- Ultra turraxed for several minutes between 12k and 17k rpm
- Started bubbling 100% CO₂ until the pH reached a value of roughly 3.8
- Added 6 g of 3-aminopropylmethyldiethoxysilane step by step so that pH never exceeded 7
- Stirred mixture for 24 h at 500 rpm under bubbling of CO₂
- Centrifuged for 20 min @ 3600 rpm
- Frozen in liquid N₂
- Evacuated frozen sample in freeze drier for 48 h
- Cured at 120°C for 2 h in argon

The BET surface area of the adsorbent was 16.5 m²/g, and the cyclic adsorption/ desorption performance is given in Fig. 5.

### 10. Production of a porous adsorbent structure starting from cellulose nanofiber suspension (similar to 9 without CO2

- Into a beaker were added 46.2 g of cellulose nanofiber suspension (@ 3.2 wt. %) and completed with demineralized H₂O to 294 g
- Ultra turraxed for several minutes between 12k and 17k rpm
- Added 6 g of 3-aminopropylmethyldiethoxysilane
- Stirred mixture for 24 h at 500 rpm
- Centrifuged for 20 min @ 3600 rpm
- Frozen in liquid N₂
- Evacuated frozen sample in freeze drier for 48 h
- Cured at 120°C for 2 h in argon atmosphere

The BET surface area of the adsorbent was 29.8 m²/g, and the cyclic adsorption/ desorption performance is given in Fig. 6.

### 11. Production of a porous adsorbent structure starting from cellulose nanofiber suspension containing an admixture of large cellulose fibers (without freeze drying)

- Hydrolyzed 2.87 g of 3-aminopropylmethyldiethoxysilane in 7.5 g of demineralized H₂O for 2 h under stirring
- Solvent exchanged 6 g of refined fibrous beech wood pulp (13.5% w/w) with EtOH/H₂O mixture (95/5, w/w) 3 times (ultra turraxed 1 min before each exchange)
- Into a beaker were added 142.5 g of EtOH, the solvent exchanged cellulose nanofibers containing an admixture of large cellulose fibers, the silane-H₂O mixture and completed with a EtOH/H₂O mixture (95/5, w/w) to 162 g

- Ultra turraxed for 1 min
- Stirred mixture for 2 h
- Poured solution completely on Nutsche filter
- Filtered by gravitation and dried at room temperature for several days
- Cured at 60°C for 3 h
The CO₂ capture capacity was 0.8 mmol/g.

### 12. Production of a porous adsorbent structure starting from cellulose nanofiber suspension containing an admixture of large cellulose fibers (mixture dialkoxy/trialkoxy without freeze drying)

- Hydrolyzed 0.76 g of 3-aminopropyltrimethoxysilane and 2.15 g of 3-aminopropylmethyldiethoxysilane in 7.5 g of demineralized H₂O for 2 h under stirring
- Solvent exchanged 6 g of refined fibrous beech wood pulp (13.5% w/w) with EtOH/H₂O mixture (95/5, w/w) 3 times (ultra turraxed 1min before each exchange)
- Into a beaker were added 142.5 g of EtOH, the solvent exchanged cellulose nanofibers containing an admixture of large cellulose fibers , the silane-H₂O mixture and completed with a EtOH/H₂O mixture (95/5, w/w) to 162 g
- Ultra turraxed for 1 min
- Stirred mixture for 2h
- Poured solution completely on Nutsche filter
- Filtered by gravitation and dried at room temperature for several days
- Cured at 60°C for 3 h
The CO₂ capture capacity was 0.87 mmol/g.

### 13. Production of a porous adsorbent structure starting from cellulose nanofiber suspension containing an admixture of large cellulose fibers

- Added 2.87 g of 3-aminopropyldiethoxysilane to sealable glass bottle and completed with H₂O to 71.75 g and left closed for roughly 1 week
- Into a beaker were added 6 g of refined fibrous beech wood pulp (13.5% w/w) the hydrolyzed silane solution and completed with H₂O to 162 g
- Ultra turraxed for 1 min
- Stirred mixture for 2h
- Poured solution on Nutsche filter
- Filtered by gravitation and dried at room temperature for several days
- Cured at 60°C for 3 h
The CO₂ capture capacity was 0.34 mmol/g.

### 14. Production of a porous adsorbent structure starting from cellulose nanofiber suspension (differing pulp feedstock)

- Into a beaker were added 120.84 g of cellulose nanofiber suspension (@ 1.2 wt. %) and completed with demineralized H₂O to 288 g
- Ultra turrax for several minutes between 12k and 17k rpm
- Add 12 g of 3-aminopropylmethyldiethoxysilane
- Stir mixture for 24 h at 500 rpm
- Centrifuge for 20 min @ 3600 rpm
- Freeze in liquid N₂
- Evacuate freezed sample in freeze drier for 48h
- Cure at 120°C for 2 h in an inert atmosphere
The CO₂ capture capacity after 12 h of CO₂ exposure was 1.56 mmol/g, and the BET surface area was 6.5 m²/g. The CO₂ uptake rate during the first 60 minutes of CO₂ adsorption was 10 µmol/g/min.

### 15. Production of a porous adsorbent structure starting from cellulose nanofiber suspension without an admixture of large cellulose fibers

- Into a beaker were added 120.84 g of cellulose nanofiber suspension (@ 1.2 wt. %) and completed with demineralized H₂O to 288 g
- Ultra turrax for several minutes between 12k and 17k rpm
- Add 12 g of 3-aminopropylmethyldiethoxysilane
- Stir mixture for 24 h at 500 rpm
- Poured solution on Nutsche filter
- Filtered by gravitation and dried at room temperature for several days
- Cure at 120°C for 2 h in an inert atmosphere
The CO₂ capture capacity was 0.06 mmol/g.

### 16. Process for CO₂ capture from air using a porous adsorbent structure made from cellulose nanofibers

A mat-shaped adsorbent structure made from cellulose nanofibers is inserted into a flow-through container. During the first process step (adsorption) it is exposed to an air flow for 0.1 to 24 hours at -10 - 40 °C and atmospheric pressure (0.7 to 1.3 bar_{abs}). During this time, CO₂ or CO₂ and water vapor is adsorbed by the sorbent structure from the air stream. In the following, the second process step (desorption) is initiated and the container is evacuated to 1 - 250 mbar_{abs} by a vacuum pump/vacuum line and the sorbent is heated to 50 - 110 °C during 5 - 240 minutes. The gas stream leaving the container is being sucked off by the vacuum pump/vacuum line (the "desorption stream") and contains 0.5 to 100% carbon dioxide, the remainder being air and/or water vapor. The air content of the desorption stream is caused by air remainders in the system volume after evacuation and air penetrating the container through leaks and/or intended openings during desorption. After completion of the desorption step, the sorbent is cooled down to desorption temperature and the next adsorption cycle is initiated.

## Claims

1. A method for producing a porous adsorbent structure that is capable of a reversible adsorption and desorption cycle for capturing CO₂ from a gas mixture, said structure comprising a support matrix of surface modified cellulose nanofibers, said surface modified cellulose nanofibers consisting of cellulose nanofibers having a diameter of 4 nm to 1000 nm and a length of 100 nm to 1 mm covered with a coupling agent being covalently bound to the surface thereof, wherein
i) said support matrix is a web of nanofibers with a porosity of at least 20%, and
ii) said coupling agent comprises at least one monoalkyldialkoxyaminosilane,
the method comprising the steps of:
a) providing a first amount of a homogenized suspension of cellulose nanofibers having a diameter of 4 nm to 1000 nm and a length of 100 nm to 1 mm in a solvent;
b) adding thereto a second amount of a coupling agent comprising at least one monoalkyldialkoxyaminosilane, thereby allowing formation of a homogeneous suspension of surface modified cellulose nanofibers in said solvent;
c) mechanically concentrating said suspension through centrifugation, filtration or pressing, thereby obtaining a wet slurry;
d) optionally washing said wet slurry with said solvent;
e) removing said solvent by a drying operation, said drying operation being selected from freeze drying, atmospheric freeze drying or a combination thereof, preferably freeze drying, thereby obtaining a dried material; and
f) subjecting said dried material to a heating process in an inert atmosphere, thereby obtaining said porous adsorbent structure.

2. The method according to claim 1, wherein said solvent is an aqueous medium which is preferably acidified, preferably with acetic acid or CO₂,more preferably with CO₂.

3. A method for producing a porous adsorbent structure that is capable of a reversible adsorption and desorption cycle for capturing CO₂ from a gas mixture, said structure comprising a support matrix of surface modified cellulose nanofibers, said surface modified cellulose nanofibers consisting of cellulose nanofibers having a diameter of 4 nm to 1000 nm and a length of 100 nm to 1 mm covered with a coupling agent being covalently bound to the surface thereof, wherein
i) said support matrix is a web of nanofibers with a porosity of at least 20%, and
ii) said coupling agent comprises at least one monoalkyldialkoxyaminosilane,
said support matrix further comprising an admixture of large cellulose fibers, said large cellulose fibers having a diameter of more than 1 µm and/or a length exceeding 1 mm
the method comprising the steps of:
a) providing a first amount of a homogenized suspension of cellulose nanofibers having a diameter of 4 nm to about 1000 nm and a length of 100 nm to 1 mm in a solvent, wherein said homogenized suspension of cellulose nanofibers further comprises an admixture of large cellulose fibers, said large cellulose fibers having a diameter of more than 1 µm and/or a length exceeding 1 mm;
b) adding thereto a second amount of a coupling agent comprising at least one monoalkyldialkoxyaminosilane, thereby allowing formation of a homogeneous suspension of surface modified cellulose nanofibers in said solvent;
c) mechanically concentrating said suspension through centrifugation, filtration or pressing, thereby obtaining a wet slurry;
d) optionally washing said wet slurry with said solvent;
e) removing said solvent by air drying at room temperature, thereby obtaining a dried material; and
f) subjecting said dried material to a heating process in an inert atmosphere, thereby obtaining said porous adsorbent structure.

4. The method according to any one of claims 1 to 3, wherein each one of said monoalkyldialkoxyaminosilanes is selected from the group consisting of:
- 3-aminopropylmethyldiethoxysilane,
- N-(2-Aminoethyl)-3-aminopropyl-methyldimethoxysilane, and
- N-(3-Methyldimethoxysilylpropyl)diethylenetriamine.

5. The method according to any one of claims 1 to 4, wherein said coupling agent further comprises a trialkoxyaminosilane in an amount of up to 60% by weight with respect to the total coupling agent weight.

6. The method according to claim 5, wherein said trialkoxyaminosilane is selected from the group consisting of:
- 3-aminopropyltriethoxysilane,
- 3-aminopropyltrimethoxysilane,
- N-(2-Aminoethyl)-3-aminopropyl-trimethoxysilane,
- N-(2-Aminoethyl)-3-aminopropyl-triethoxysilane, and
- N-(3-Trimethoxysilylpropyl)diethylenetriamine.

## Patentansprüche

1. Verfahren zur Herstellung einer porösen Adsorptionsmittelstruktur, die zu einem reversiblen Adsorptions- und Desorptionszyklus zum Einfangen von CO₂ aus einem Gasgemisch fähig ist, wobei die besagte Struktur eine Trägermatrix aus oberflächenmodifizierten Cellulose-Nanofasern umfasst, wobei die besagten oberflächenmodifizierten Cellulose-Nanofasern aus Cellulose-Nanofasern mit einem Durchmesser von 4 nm bis 1000 nm und einer Länge von 100 nm bis 1 mm bestehen, die mit einem Kupplungsmittel bedeckt sind, das kovalent an deren Oberfläche gebunden ist, wobei
i) die besagte Trägermatrix ein Gewebe aus Nanofasern mit einer Porosität von mindestens 20% ist, und
ii) das besagte Kupplungsmittel mindestens ein Monoalkyldialkoxyaminosilan umfasst,
wobei das Verfahren die folgenden Schritte umfasst:
a) Bereitstellen einer ersten Menge einer homogenisierten Suspension von Cellulose-Nanofasern mit einem Durchmesser von 4 nm bis 1000 nm und einer Länge von 100 nm bis 1 mm in einem Lösungsmittel;
b) Zugeben einer zweiten Menge eines Kupplungsmittels, das mindestens ein Monoalkyldialkoxyaminosilan umfasst, wodurch die Bildung einer homogenen Suspension von oberflächenmodifizierten Cellulose-Nanofasern in dem besagten Lösungsmittel bewirkt wird;
c) mechanisches Aufkonzentrieren der besagten Suspension durch Zentrifugieren, Filtrieren oder Pressen, wodurch eine nasse Aufschlämmung erhalten wird;
d) optionales Waschen der besagten nassen Aufschlämmung mit besagtem Lösungsmittel;
e) Entfernen des besagten Lösungsmittels durch einen Trocknungsvorgang, wobei der besagte Trocknungsvorgang aus Gefriertrocknung, atmosphärischer Gefriertrocknung oder einer Kombination davon, vorzugsweise Gefriertrocknung, ausgewählt wird, wodurch ein getrocknetes Material erhalten wird; und
f) Unterziehen des besagten getrockneten Materials einem Erhitzungsprozess in einer inerten Atmosphäre, wodurch die besagte poröse Adsorptionsstruktur erhalten wird.

2. Verfahren nach Anspruch 1, wobei das besagte Lösungsmittel ein wässriges Medium ist, das vorzugsweise angesäuert ist, vorzugsweise mit Essigsäure oder CO₂, besonders bevorzugt mit CO₂.

3. Verfahren zur Herstellung einer porösen Adsorptionsmittelstruktur, die zu einem reversiblen Adsorptions- und Desorptionszyklus zum Einfangen von CO₂ aus einem Gasgemisch fähig ist, wobei die besagte Struktur eine Trägermatrix aus oberflächenmodifizierten Cellulose-Nanofasern umfasst, wobei die besagten oberflächenmodifizierten Cellulose-Nanofasern aus Cellulose-Nanofasern mit einem Durchmesser von 4 nm bis 1000 nm und einer Länge von 100 nm bis 1 mm bestehen, die mit einem Kupplungsmittel bedeckt sind, das kovalent an deren Oberfläche gebunden ist, wobei
i) die besagte Trägermatrix ein Gewebe aus Nanofasern mit einer Porosität von mindestens 20% ist, und
ii) das besagte Kupplungsmittel mindestens ein Monoalkyldialkoxyaminosilan umfasst,
wobei die besagte Trägermatrix überdies eine Beimischung von grossen Cellulosefasern umfasst, wobei die besagten grossen Cellulosefasern einen Durchmesser von mehr als 1 µm und/oder eine Länge von mehr als 1 mm aufweisen
wobei das Verfahren die folgenden Schritte umfasst:
a) Bereitstellen einer ersten Menge einer homogenisierten Suspension von Cellulose-Nanofasern mit einem Durchmesser von 4 nm bis 1000 nm und einer Länge von 100 nm bis 1 mm in einem Lösungsmittel, wobei die besagte homogenisierte Suspension von Cellulose-Nanofasern überdies eine Beimischung von grossen Cellulosefasern umfasst, wobei die besagten grossen Cellulosefasern einen Durchmesser von mehr als 1 µm und/oder eine Länge von mehr als 1 mm aufweisen;
b) Zugeben einer zweiten Menge eines Kupplungsmittels, das mindestens ein Monoalkyldialkoxyaminosilan umfasst, wodurch die Bildung einer homogenen Suspension von oberflächenmodifizierten Cellulose-Nanofasern in dem besagten Lösungsmittel bewirkt wird;
c) mechanisches Aufkonzentrieren der besagten Suspension durch Zentrifugieren, Filtrieren oder Pressen, wodurch eine nasse Aufschlämmung erhalten wird;
d) optionales Waschen der besagten nassen Aufschlämmung mit besagtem Lösungsmittel;
e) Entfernen des besagten Lösungsmittels durch Lufttrocknung bei Raumtemperatur, wodurch ein getrocknetes Material erhalten wird; und
f) Unterziehen des besagten getrockneten Materials einem Erhitzungsprozess in einer inerten Atmosphäre, wodurch die besagte poröse Adsorptionsstruktur erhalten wird.

4. Verfahren nach einem der Ansprüche 1 bis 3, wobei jedes der besagten Monoalkyldialkoxyaminosilane ausgewählt ist aus der Gruppe bestehend aus:
- 3-Aminopropylmethyldiethoxysilan,
- N-(2-Aminoethyl)-3-aminopropyl-methyldimethoxysilan, und
- N-(3-Methyldimethoxysilylpropyl)diethylenetriamin.

5. Verfahren nach einem der Ansprüche 1 bis 4, wobei das besagte Kupplungsmittel überdies ein Trialkoxyaminosilan in einer Menge von bis zu 60 Gew.-%, bezogen auf das Gesamtgewicht des Kupplungsmittels, umfasst.

6. Verfahren nach Anspruch 5, wobei das besagte Trialkoxyaminosilan ausgewählt ist aus der Gruppe bestehend aus:
- 3-Aminopropyltriethoxysilan,
- 3-Aminopropyltrimethoxysilan,
- N-(2-Aminoethyl)-3-aminopropyl-trimethoxysilan,
- N-(2-Aminoethyl)-3-aminopropyl-triethoxysilan, und
- N-(3-Trimethoxysilylpropyl)diethylenetriamin.

## Revendications

1. Procédé de production d'une structure poreuse adsorbante permettant d'effectuer un cycle d'adsorption et de désorption réversible pour la capture de CO₂ à partir d'un mélange gazeux, cette structure comprenant une matrice de support à surface de nanofibres de cellulose modifiée, ces nanofibres de cellulose à surface modifiée sont des nanofibres ayant un diamètre compris entre 4 nm et 1000 nm et une longueur de 100 nm à 1 mm, couvertes d'un agent de couplage lié par covalescence à la surface de ceux-ci,
procédé selon lequel
i) la matrice de support est une nappe de nanofibres ayant une porosité d'au moins 20%, et
ii) l'agent de couplage comprend au moins un monoalkyldialkoxyaminosilane,
le procédé comprenant les étapes suivantes consistant à :
a) fournir une première quantité d'une suspension homogénéisée de nanofibres de cellulose d'un diamètre compris entre 4 nm et 1000 nm et une longueur comprise entre 100 nm et 1 mm dans un solvant,
b) ajouter une seconde quantité d'un agent de couplage comprenant au moins un monoalkyldialkoxyaminosilane, permettant ainsi la formation d'une suspension homogène de nanofibres de cellulose à surface modifiée dans le solvant,
c) concentrer mécaniquement cette suspension par centrifugation, filtration ou pressage pour obtenir une boue humide,
d) en option, laver la boue humide avec le solvant,
e) enlever ce solvant par une opération de séchage, cette opération de séchage étant choisie dans les opérations suivantes : séchage par congélation, séchage par froid atmosphérique ou une combinaison de ces modes de séchage, de préférence séchage par congélation pour obtenir un matériau sec, et
f) soumettre le matériau, séché, à un procédé de chauffage dans une atmosphère de gaz inerte pour obtenir la structure poreuse adsorbante.

2. Procédé selon la revendication 1,
selon lequel
le solvant est un milieu aqueux, de préférence acidifié, de préférence avec de l'acide acétique ou avec CO₂ et de manière plus préférentielle,
avec CO₂.

3. Procédé de production d'une structure poreuse adsorbante permettant un cycle réversible d'adsorption et de désorption pour capturer CO₂ d'un mélange gazeux, cette structure comprenant une matrice de support en nanofibres de cellulose à surface modifiée, ces nanofibres de cellulose à surface modifiée étant des nanofibres de cellulose ayant un diamètre compris entre 4 nm et 1000 nm et une longueur comprise entre 100 nm et 1 mm, la surface étant couverte d'un agent de couplage lié par covalescence à la surface,
selon lequel
i) la matrice de support est une nappe de nanofibres d'une porosité d'au moins 20% et,
ii) l'agent de couplage comprend au moins un monoalkyldialkoxyaminosilane,
cette matrice de support comprenant en outre un ajout de grandes fibres de cellulose, ces grandes fibres de cellulose ayant un diamètre supérieur à 1 µm et/ou une longueur supérieure à 1 mm,
le procédé consistant à :
a) fournir au moins une quantité d'une suspension homogénéisée de nanofibres de cellulose d'un diamètre compris entre 4 nm et 1000 nm et une longueur comprise entre 100 nm et 1 mm dans un solvant, cette suspension homogénéisée de nanofibres de cellulose comprenant en outre un ajout de grandes fibres de cellulose, ces grandes fibres de cellulose ayant un diamètre supérieur à 1 µm et/ou une longueur supérieure à 1 mm,
b) ajouter une seconde quantité d'un agent de couplage comprenant au moins du monoalkyldioxyaminosilane permettant ainsi la formation d'une suspension homogène de nanofibres de cellulose à surface modifiée dans le solvant,
c) concentrer mécaniquement cette suspension par centrifugation, filtrage ou pressage pour obtenir une boue humide,
d) en option, laver la boue humide avec le solvant,
e) enlever le solvant par un séchage à l'air à température ambiante pour obtenir un matériau sec, et
f) soumettre le matériau sec à un procédé de chauffage dans une atmosphère inerte pour obtenir la structure adsorbante poreuse.

4. Procédé selon l'une quelconque des revendications 1 à 3,
selon lequel
chaque monoalkyldialkoxyaminosilane est choisi dans le groupe comprenant :
- 3-aminopropylméthyldiéthoxysilane,
- N-(2-Aminoéthyle)-3-aminopropyl-méthylediméthoxysilane, et
- N-(3-Méthylediméthoxysilylpropyl) diéthylènetriamine.

5. Procédé selon l'une quelconque des revendications 1 à 4,
selon lequel
l'agent de couplage comprend en outre un trioxyaminosilane selon une quantité allant jusqu'à 60% en poids par rapport au poids total de l'agent de couplage.

6. Procédé selon la revendication 5,
selon lequel
le trialkoxyaminosilane est choisi dans le groupe comprenant :
- 3-aminopropyltriéthoxysilane,
- 3-aminopropyltriméthosysilane,
- N-(2-Aminoéthyl)-3-aminopropyl-triméthoxysilane,
- N-(2-Aminoéthyl)-3-aminopropyl-triéthoxysilane, et
- N-(3-Triméthoxysilvylpropyl) diéthylenetriamine.
